**Europäisches Patentamt**

**European Patent Office**

**Office européen des brevets**

(19)

(11) Veröffentlichungsnummer: **0 010 665**
**B1**

(12) **EUROPÄISCHE PATENTSCHRIFT**

(45) Veröffentlichungstag der Patentschrift:
25.11.81

(21) Anmeldenummer: 79103931.6

(22) Anmeldetag 12.10.79

(51) Int. Cl.³: **B 01 D 11/02,** C 11 B 9/02,
C 12 C 9/02, A 23 F 5/00,
A 23 L 1/22, A 24 B 15/24 //
A61K7/00, C09B61/00

(54) Verfahren zur extraktiven Bearbeitung von pflanzlichen und tierischen Materialien.

(30) Priorität: 13.10.78 DE 2844781

(43) Veröffentlichungstag der Anmeldung:
14.05.80 Patentblatt 80/10

(45) Bekanntmachung des Hinweises auf die Patenterteilung:
25.11.81 Patentblatt 81/47

(84) Benannte Vertragsstaaten:
AT BE CH FR GB IT LU NL

(56) Entgegenhaltungen:
DE-A-1 492 736
DE-A-2 043 537
DE-A-2 106 133
DE-A-2 212 281
DE-A-2 226 624
DE-A-2 256 111
DE-A1-2 357 590
DE-A1-2 727 191
DE-B-1 090 502
DE-B-1 206 393
DE-C-577 626
CHEMIE-INGENIEUR-TECHNIK, Band 48, Nr. 9,
1976, Weinheim

(73) Patentinhaber: HAG Aktiengesellschaft, Hagstrasse,
D-2800 Bremen 1 (DE)

(72) Erfinder: Kurzhals, Hans-Albert, Dr. Dipl.-Ing., Verdener
Strasse 198, D-2819 Morsum (DE)
Erfinder: Hubert, Peter, Upper Borg 125,
D-2800 Bremen 33 (DE)

(74) Vertreter: Abitz, Walter, Dr.-Ing. et al, Abitz, Morf,
Gritschneder P.O. Box 86 01 09, D-8000 München 86 (DE)

E. STAHL et al. »Extraktion mit überkritischen
Gasen in direkter Kopplung mit der Dünnschicht-
Chromatographie« Seiten 773 bis 778
CHEMISCHE TECHNIK, Band 15, Nr. 6, 1963,
Weinheim
»Extraktion und verflüssigten Gasen« Seite 365
D. Dinelli, Brit. chem. Engng., Band 7, 1962, Seite
867
CHEMISTRY AND INDUSTRY, 7. Oktober 1978
E. PRIESTLEY et al. »Gas agitated liquid extraction columns« Seiten 757 bis 760

## Verfahren zur extraktiven Bearbeitung von pflanzlichen und tierischen Materialien

Gegenstand der Erfindung ist ein Verfahren zur schonenden, extraktiven Bearbeitung von pflanzlichen und tierischen Materialien mit einem nicht reaktiven, flüssigen Lösungsmittelgemisch ohne Rückstandsprobleme mit anpaßbaren Lösungseigenschaften, wobei entweder der pflanzliche oder tierische Trägerstoff oder die extrahierten Substanzen auf einfache Weise gewonnen werden können.

Die bisher bekannt gewordenen Verfahren zur extraktiven Bearbeitung von Materialien pflanzlicher oder tierischer Herkunft arbeiten in den meisten Fällen mit Lösungsmitteln, die aus reinen Stoffen oder aus Stoffgemischen bestehen, deren Komponenten bei normalen Bedingungen flüssig sind. Üblicherweise werden dabei neben Wasser überwiegend Lösungsmittel organischer Herkunft eingesetzt, wie z. B. Kohlenwasserstoffe, Alkohole, Säuren, Ester, Äther, Ketone, usw., wobei auch die halogenierten Derivate häufige Anwendung finden. Es ist in den meisten Fällen erforderlich, die Lösungsmittel aus den bearbeiteten Materialien und/oder Extrakten zu entfernen.

Als Hauptnachteil dieser Lösungsmittel sind die relativ großen intermolaren Bindekräfte anzusehen, die es erforderlich machen, das große Energiemengen oder komplizierte und aufwendige Verfahren zur Entfernung der Lösungsmittel angewendet werden müssen. Neben dem ökonomischen Nachteil ergeben sich dabei häufig auch Veränderungen im bearbeiteten Material und/oder im Extrakt, die ihre Ursache in (chemischen) Adduktbildungen z. B. mit dem Lösungsmittel oder in thermischen Denaturierungen haben. Daher ist im allgemeinen eine völlig rückstandsfreie Entfernung der Lösungsmittel aus Material und/oder Extrakt nicht möglich. Diese Rückstände sind unerwünscht.

Viele der zur Extraktion von pflanzlichen und tierischen Materialien eingesetzten Lösungsmitteln sind brennbar und werfen daher entsprechende Probleme bei der betrieblichen Anwendung auf.

Zur Umgehung der genannten stoff- und verfahrensbezogenen Nachteile bei der Anwendung von bei normalen Bedingungen flüssigen Lösungsmitteln wurden in neuerer Zeit Verfahren vorgeschlagen, die entweder mit überkritischen oder flüssigen Gasen bei hohen Drücken arbeiten. Hierbei erfolgt die Anpassung der Lösungseigenschaften bei überkritischen Gasen hauptsächlich durch Wahl von Druck und Temperatur, bei flüssigen Gasen hauptsächlich durch Druck. Als Beispiele für solche Verfahren seien genannt die Gewinnung von Gewürzextrakten (DE-C-2 127 611), Herstellung von Hopfenextrakten (DE-C-2 127 618), die Nikotin-Entfernung aus Tabak (DE-C-2 142 205) und die Gewinnung von Kakaobutter (DE-C-2 127 643).

Diesen Verfahren ist gemeinsam, daß sie zur Erzielung ausreichend hoher Extraktionsgrade bei relativ hohen Drücken, im allgemeinen über 150 bar, arbeiten.

Die vorliegende Erfindung hat sich zur Aufgabe gestellt, die genannten Nachteile der bisher bekannten Verfahren zu vermeiden. Diese Aufgabe wird erfindungsgemäß dadurch gelöst, daß man eine aus zwei Komponenten bestehende Mischung verwendet,

a) deren erste Komponente bei den angewandten Bedingungen an sich gasförmig ist, und
b) deren zweite Komponente für sich allein solche physikalischen Eigenschaften hat, daß die Mischung von a) und b bei der angewandten Temperatur flüssig ist.

Es wurde nämlich gefunden, daß durch geeignete Wahl der Komponenten der erfindungsgemäß zu verwendenden Mischung eine optimale Anpassung der Löseeigenschaften (Selektivität, Löslichkeit und Ausbeute) möglich ist, ohne daß die oben genannten Nachteile auftreten.

Als erste Komponente, die bei den angewandten Bedingungen an sich gasförmig ist, eignen sich gesundheitlich unbedenkliche, besonders nicht entflammbare Gase. Bevorzugt werden solche Gase, die natürlich im zu behandelnden Material vorkommen. Diese Gase können für sich allein oder in Mischungen verwandt werden.

Als erste Komponente sind generell z. B. folgende Gase geeignet: $CO_2$, $N_2O$ (hier sind die Zerfallsbereiche zu beachten), $SF_6$, Xe, $CF_4$, Methan, Äthylen, Acetylen, Cyclopropan.

Als zweite Komponente, die für sich allein solche physikalischen Eigenschaften hat, daß ihre Mischung mit der bei den angewandten Bedingungen an sich gasförmigen Komponente bei der angewandten Temperatur flüssig ist, eignen sich gesundheitlich unbedenkliche Stoffe, insbesondere Inhaltsstoffe des zu extrahierenden Materials. Diese Verwendung von Inhaltsstoffen als zweite Komponente bietet den Vorteil, daß sie keine lebensmittelrechtlichen Probleme aufwerfen, da sie nicht als Substanzen im Sinne der Zusatzstoffverordnungen gelten. Als zweite Komponenten kommen beispielsweise die folgenden Verbindungsgruppen in Betracht, die auch in den beispielhaft genannten Ausgangsmaterialien natürlich enthalten sind: Kohlenwasserstoffe, Alkohole, Ketone, Ketoalkohole, Acetale, Äther, Ester, Carbonsäuren, Amine, Lipide.

Beispiele, auf die das vorliegende Verfahren vorteilhaft anwendbar ist, sind:

Gewinnung von — Aromaöl aus Röstkaffee
               — Teearoma schwarzem Tee
               — Hopfenextrakten

2

- Gewürzextrakten mit natürlicher Zusammensetzung
- nikotinfreiem oder nikotinvermindertem Tabak, der zudem in seinem Kondensatgehalt reduziert ist
- Pflanzenfetten und -ölen
- fettfreien Enzymen
- Duft- und Riechstoffen aus pflanzlichen und tierischen Materialien
- Drogenextrakten
- Aglykonen aus Glykosiden, ggf. nach vorheriger Spaltung
- Extrakten aus Zitrusfrüchten
- Farbstoffen aus pflanzlichen Materialien
- pflanzlichen Insektiziden
- Fleischaromen
- tierischen Fetten bzw. fettreduziertem Fleisch

Bei vielen Anwendungen des vorliegenden Verfahrens auf die oben beispielhaft genannten Ausgangsstoffe sollen alle die Komponenten vollständig extrahiert werden, die in ihrer Gesamtheit den Wertstoff ausmachen und von Ballaststoffen weitestgehend frei sind. Die Auswahl der zweiten Komponente hat hierbei also unter dem Gesichtspunkt der Abtrennung eines im allgemeinen komplexen Gemisches zu erfolgen, wobei in vielen Fällen nicht nur eine der oben genannten Verbindungen, sondern eine Mischung mehrerer Verbindungen als zweite Komponente vorteilhaft ist. Ihre Auswahl und Konzentration im erfindungsgemäßen Lösungsmittel richtet sich unter dem Kriterium einer möglichst hohen Lösefähigkeit für den zu gewinnenden Extrakt nach der Art des Extraktionsgutes, nach den gewählten Arbeitsbedingungen und nach den Eigenschaften der ersten Komponente, mit der sich eine flüssige Lösung ergeben muß.

Die Temperatur der erfindungsgemäßen Extraktion liegt vorzugsweise zwischen etwa 260 und 400 K, bei Verwendung von $CO_2$ als erster Komponente bevorzugt zwischen Raumtemperatur und ca. 340 K. Der Extraktionsdruck ist mindestens so hoch zu wählen, daß die erfindungsgemäß zu währende Lösung bei der gewählten Zusammensetzung und der eingestellten Temperatur flüssig ist, wobei sich eine Begrenzung des anzuwendenden Extraktionsdrucks nach oben lediglich durch wirtschaftliche Erwägungen ergibt.

Überraschenderweise tritt nämlich bei isothermer Drucksteigerung bei vielen Systemen eine Beschleunigung der Extraktionsgeschwindigkeit ein, obwohl die Dichteerhöhung der flüssigen Lösung relativ gering ist. Umgekehrt eröffnet die Anwendung niedrigerer Drücke die Möglichkeit, mit geringem apparativen Aufwand auszukommen.

Das Mengenverhältnis von flüssiger Lösung zum Extraktionsgut soll einerseits so groß sein, daß die Extraktionsdauer möglichst gering ist, andererseits sollen unwirtschaftlich große Lösungsmittelmengen vermieden werden.

Die Extraktion erfolgt in üblicher Weise und kann nach allen bekannten Verfahren der Fest-flüssig-Extraktion durchgeführt werden, wobei sowohl kontinuierliche als diskontinuierliche Verfahren anwendbar sind.

Die Abtrennung des Extrakts aus dem Lösungsmittel ist bevorzugt möglich durch Destillation, durch Ausnutzung einer Mischungslücke des aus den beiden Komponenten bestehenden Lösungsmittels oder durch Verschieben der Lösungseigenschaften des Lösungsmittels im einphasigen System (z. B. Ausfällung). In allen Fällen ist eine Druck- und/oder Temperaturänderung notwendig. Beim Ausnutzen einer Mischungslücke ist es besonders vorteilhaft, wenn eine der entmischten Komponenten ein erheblich besseres Lösungsvermögen für den Extrakt hat als die andere. Diese Phase wird dann aus dem System ausgeschleust, durch an sich bekannte Trennverfahren aufgetrennt und die reine Komponente dem System wieder zugeführt.

Weitere Möglichkeiten der Extraktabtrennung bestehen darin, daß man den Extrakt durch Adsorption (Bindung an Feststoffe) oder durch Flüssig-flüssig-Extraktion aus dem erfindungsgemäß zu verwendenden Lösungsmittelgemisch entfernt. Besonders vorteilhaft ist diese Art der Abtrennung dann, wenn der Extrakt nicht in reiner Form, sondern gebunden an einen festen oder flüssigen Trägerstoff der weiteren Verwendung zugeführt werden soll.

Nach Beendigung der Extraktion wird die flüssige Lösung vom Extraktionsgut abgetrennt. Erfolgt diese Abtrennung unter gleichzeitiger Druckabsenkung, so verbleibt im wesentlichen nur ein geringer Teil der zweiten Komponente im System und damit im Extraktionsgut und kann bei Bedarf durch Evakuieren, Erhitzen, Dämpfen oder Spülung mit der ersten Komponente oder anderen Inertgasen entfernt werden.

Überraschenderweise wurde gefunden, daß sich bei der Bearbeitung von Extraktionsgut mit fester Matrix die Reste der zweiten Komponente nach Abtrennung der Lösung fast ausschließlich auf der Oberfläche des Extraktionsgutes befinden und daher einfach und rückstandsfrei entfernt werden können.

Bei isobarer Abtrennung der Lösung kann das von ihr eingenommene Volumen im Extraktionssystem durch Inertgase oder durch die reine erste Komponente ersetzt werden. Verwendet man Inertgase oder erste Komponenten, die nicht brennbar sind und die Verbrennung nicht unterhalten, so bietet diese Abtrennmethode den Vorteil, daß brennbare zweite Komponenten bei der anschließenden Entleerung der Anlage in so geringer Konzentration vorliegen, daß sie im Gemisch mit Luft keinen Zündbereich haben. Bei der beschriebenen Art der isobaren Abtrennung der Lösung ist im allgemeinen keine zusätzliche Behandlung zur Restlösungsmittel-Entfernung mehr nötig.

## Beispiele

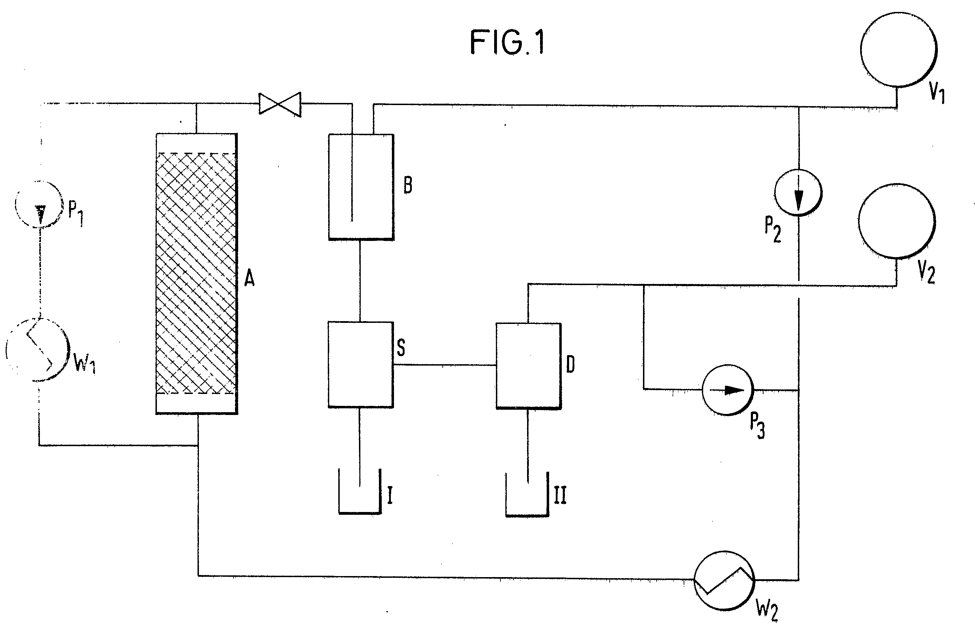

1.  2,5 kg lufttrockener Hallertauer Hopfen wurde in einer Apparatur gemäß Figur 1 unter den folgenden Bedingungen mit einem flüssigen Gemisch aus 94 Mol-% $CO_2$ (aus Vorratsbehälter V1) und 6 Mol-% n-Butan (aus Vorratsbehälter V2), das eine kritische Temperatur von 310,9 K und einen kritischen Druck von 71,9 bar hat, extrahiert:

Extraktionsdruck:    82,7 bar
Extraktionstemp.:    308,2 K

Hierbei wurde das Lösungsmittel mit Hilfe von Pumpe P1 gefördert und durch Wärmetauscher W1 temperiert, im Kreislauf durch Extraktionsbehälter A befördert und mit Extrakt angereichert. Ein Nebenstrom wurde in Abscheidebehälter B hinein auf 50 bar entspannt. Dabei trat eine butanreiche, flüssige Phase auf, die sowohl gelöste als auch untelöste Extraktkomponenten enthielt, sowie eine $CO_2$-reiche, gasförmige Phase, die nahezu frei von gelösten Hopfeninhaltsstoffen war. Letztere wurde aus dem Abscheidebehälter nach oben abgezogen. Die flüssige Phase wurde im Separator S geklärt, wobei der ungelöste Extraktanteil I anfiel. Die geklärte, flüssige Phase wurde in der Destillationsapparatur D von den gelösten Hopfensubstanzen befreit, die als Extraktanteil II anfielen. Die $CO_2$-reiche, gasförmige Phase aus B wird durch Kompressor P2 rekomprimiert und das Destillat aus D wird mit Pumpe P3 gefördert, und beide Stoffströme werden zusammengeführt. Die sich bildende Mischung, die an dieser Stelle wieder die gleiche Zusammensetzung aufwies wie das reine Lösungsmittel, wurde im Wärmetauscher W2 auf Extraktionsbedingungen temperiert und somit dem Hauptstrom flüssig wieder zugeführt.
Die Anlage gemäß Fig. 1 wurde 4 h lang betrieben. Es wurde eine Ausbeute von insgesamt 355 g eines hellgrünen Extrakts gewonnen. Dabei wurde nun gefunden, daß der Extraktanteil II besonders reich an solchen Komponenten war, die dem Hopfenöl zuzurechnen sind, während Extraktanteil I relativ wenig Hopfenöle, dafür mehr Weichharzanteile enthielt.
Die folgende Tabelle zeigt die analytischen Daten des als Ausgangsmaterial verwendeten Hopfens, des Extrakts, d. h. der Summe der Anteile I und II, sowie die Daten des Hopfentrebers:

Ergebnisse Hopfenanalytik

| Bestimmung von | Hopfen unbearbeitet | Treber | Extrakt I + II |
|---|---|---|---|
| Wasser (%) | 10,5 | 12,3 | 3,4 |
| Gesamtharz (%) | 23,0 | 4,1 | 91,9 |
| Weichharz (%) | 20,8 | 2,0 | 89,4 |
| $\alpha$-Säuren (%) | 10,1 | <0,1 | 46,3 |
| $\beta$-Säuren (%) | 10,7 | 1,9 | 41,5 |
| Hartharze (%) | 2,2 | 2,3 | 2,1 |
| Hopfenöle (%) | 1,0 | <0,1 | 4,9 |
| Gerbstoffe (%) | 4,3 | 5,3 | 0 |

2. 5 kg gemahlener schwarzer Pfeffer mit einem Piperingehalt von 9,8% wurden in der Apparatur gemäß Figur 1 mit einem Gemisch aus 58,8 Mol-% $CO_2$ und 41,2 Mol-% Propan bei 325 K und 78 bar extrahiert. Die Betriebsweise entsprach der bereits im Beispiel 1 geschilderten. Allerdings wurde der Separator S in diesem Falle nicht benötigt, vielmehr wurde die nach Entspannung auf 45 bar in Abscheidebehälter B auftretende flüssige Phase nebst den ausgefallenen Extraktkomponenten direkt der Destillationsapparatur D zugeführt.
Die Anlage wurde 2 h lang betrieben. Es wurden 936 g eines gelben, intensiv duftenden Pfeffer-Extrakts mit 51,3% Piperin erhalten. Dies entspricht einer Ausbeute von 18,7%. Der Extraktionsgrad, bezogen auf Piperin, liegt damit bei 98%.

3. Bearbeitung von Tabak.

Hierbei geht es um die Gewinnung der pflanzlichen Matrix, wobei die Bearbeitung ein- und mehrstufig erfolgen kann.

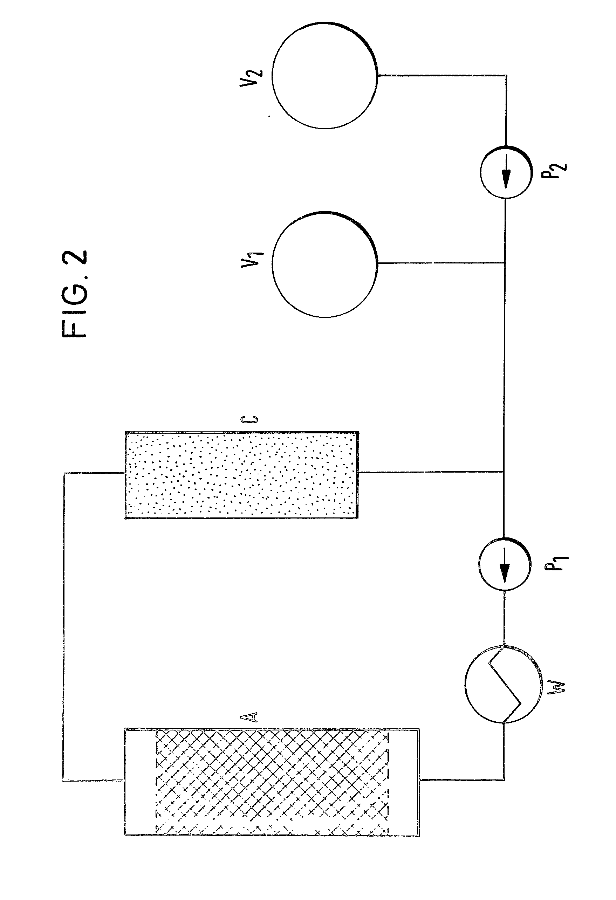

3.1 5 kg mit 3,7% Nikotin in Trockensubstanz wurden auf 20% Wassergehalt aufgefeuchtet und 2,5 h in einer Apparatur gemäß Figur 2 entnikotinisiert. Dabei wurde als Lösungsmittel ein flüssiges Gemisch aus 93 Mol-% $CO_2$ (aus Vorratsbehälter V1) als erster und 7 Mol-% Äthanol (aus Vorratsbehälter V2, eingespeist mit Pumpe P2) als zweiter Komponente eingesetzt. Das Lösungsmittel wurde mittels Pumpe P1 im Kreislauf durch den Tabak enthaltenden Extraktionsbehälter A und den Adsorber C gefördert. Dieser enthielt als selektiv wirkendes Adsorptionsmittel für Nikotin ein Ionenaustauschharz. Wärmetauscher W diente zur Einstellung der Extraktionstemperatur von 316 K. Der Druck betrug im Kreislauf 100 bar.
Nach Bearbeitung wurde der Tabak auf seine Ausgangsfeuchte von ca. 10% zurückgetrocknet. Der Nikotingehalt betrug 0,03% in der Trockensubstanz. Seine Schüttdichte hatte sich von 170 auf 136 kg/cm$^3$ verringert. Im übrigen war das typische Aussehen des Schnittabaks unverändert. Das Material hatte auch bezüglich des Aromas ausgezeichnete Raucheigenschaften. Die Kondensatmenge des behandelten gegenüber dem unbehandelten Tabak war um 43% reduziert.

3.2 Für einen aromaempfindlicheren Virginia-Tabak wurde das folgende mehrstufige Verfahren angewendet:

1. Stufe: 5 kg trockenem Virginia-Tabak mit einer Feuchte von 8% wurden in einer Apparatur gemäß Figur 1 das Aroma entzogen und einer zuvor nikotinreduzierten Tabakcharge übertragen. Dabei befand sich das Ausgangsmaterial im Extraktionsbehälter A und der zu aromatisierende Tabak im Abscheidebehälter B. Als Lösungsmittel diente eine flüssige Mischung aus 94 Mol-% $CO_2$ und 6 Mol-% n-Butan. Der Extraktionsdruck betrug 88 bar, die Extraktionstemperatur 309 K. Der aromahaltige Lösungsmittelstrom wurde in Behälter B entspannt, wobei ein Druck von 28 bar eingestellt wurde. Dabei entstand eine Butan-reiche, flüssige Phase und eine $CO_2$-reiche Dampfphase, welche aus B abgezogen wurde. Die Flüssigphase perkolierte durch die Tabakschüttung und gab dabei den größten Teil der Aromastoffe an den Tabak ab. Danach wurde sie ohne Benutzung von Separator S und Destillationsapparatur D mit Hilfe der Pumpe P3 abgezogen, mit der $CO_2$-reichen Phase, die durch Pumpe P2 rekomprimiert wurde, vereinigt und dem Extraktionskreis über den Wärmetauscher W2 wieder zugeführt.

2. Stufe: Der entaromatisierte Tabak wurde dann auf 22% Wassergehalt aufgefeuchtet und zu seiner Nikotinreduktion verfahren wie in Beispiel 3.1 dargestellt. Nach Rücktrocknung auf ca. 10% wurde er, wie in der 1. Stufe beschrieben, im Behälter B einer Aromaübertragung aus einer frischen Tabakcharge unterzogen. Es wurde ein Produkt mit gegenüber dem Ausgangsmaterial unverändertem Aussehen und sehr guten Raucheigenschaften erhalten.

Analysendaten

|  | Ausgangstabak | Entaromatisiert | Nikotinreduziert | Rearomatisiert |
|---|---|---|---|---|
| Nikotin (%) in Trockensubstanz | 1,85 | 1,83 | 0,04 | 0,05 |
| Schüttdichte (kg/m$^3$) | 170 | nicht bestimmt | nicht bestimmt | 128 |

# 0 010 665

4. 25 kg geschrotete Sojabohnen wurden in einer Anlage gemäß Figur 1 extrahiert. Dabei wurde als Lösungsmittel eine flüssige Mischung aus 92 Mol-% $CO_2$ und 8 Mol-% Pentan verwendet, der Extraktionsdruck betrug 100 bar, die Extraktionstemperatur 339 K. Nach Entspannung auf 42 bar wurde die entstehende $CO_2$-reiche, extraktfreie Gasphase aus B mittels Pumpe P2 rekomprimiert. Die Pentan-reiche, extrakthaltige flüssige Phase wurde aus Abscheidebehälter B abgezogen und unter Umgehung des Separators in der Destillationsapparatur D von Pentan und $CO_2$ befreit. Das Destillat wurde, wie in den vorhergehenden Beispielen beschrieben, dem Kreislauf wieder zugeführt. Es fielen 4,6 kg hellgelbes Sojaöl an. Das Ausgangsmaterial hatte einen Fettgehalt von 18,5%, der Restfettgehalt des extrahierten Schrotes war <0,1%.

5. 500 kg gemahlene, naturfeuchte Orangenschalen wurden zur Gewinnung des enthaltenen Farbstoffs (Carotin) in einer Anlage gemäß Figur 1 mit einem flüssigen Gemisch aus 92 Mol-% $CO_2$ und 8 Mol-% Aceton bei einem Extraktionsdruck von 90 bar und einer Extraktionstemperatur von 310 K 0,5 h lang extrahiert. Der Abscheidedruck in Behälter B betrug 25 bar. Die gasförmige, extraktfreie $CO_2$-reiche Phase wurde von Pumpe P2 rekomprimiert, die flüssige Phase unter Umgehung des Separators S in der Destillationsapparatur D von Aceton und $CO_2$ befreit. Das Destillat wurde dem Kreislauf wieder zugeführt (siehe vorhergehende Beispiele). Es fiel ein dunkelrotes Öl mit einem Gesamtcarotingehalt von 150 g Carotin an. Der Carotingehalt des Ausgangsmaterials lag bei 320 mg/kg Trockensubstanz. Die Ausbeute betrug demnach 93,8%. Im Extrakt wurde ein Rest-Acetongehalt von <10 ppm festgestellt.

## Patentansprüche

1. Verfahren zur extraktiven Bearbeitung von pflanzlichen und tierischen Materialien mit einem flüssigen, gesundheitlich unbedenklichen Lösungsmittelgemisch, dadurch gekennzeichnet, daß man eine aus zwei Komponenten bestehende Lösung verwendet,

a) deren erste Komponente bei den angewandten Bedingungen an sich gasförmig ist, und
b) deren zweite Komponente für sich allein solche physikalischen Eigenschaften hat, daß die Mischung von a) und b) bei der angewandten Temperatur flüssig ist.

2. Verfahren gemäß Anspruch 1, dadurch gekennzeichnet, daß als erste Komponente $CO_2$ allein, oder Gasmischungen, bevorzugt solche mit $CO_2$, verwendet werden.

3. Verfahren gemäß Anspruch 1 und/oder 2, dadurch gekennzeichnet, daß man als zweite Komponente Inhaltsstoffe des pflanzlichen oder tierischen Materials oder als Lebensmittel geltende Stoffe verwendet.

4. Verfahren gemäß Ansprüchen 1 bis 3, dadurch gekennzeichnet, daß man im Temperaturbereich zwischen Raumtemperatur und 340 K arbeitet.

5. Verfahren gemäß einem oder mehrerer der Ansprüche 1 bis 4, dadurch gekennzeichnet, daß man das Lösungsmittel im Kreislauf führt und den Extrakt dadurch abscheidet, daß man den Druck absenkt und/oder die Temperatur erhöht und dabei eine Phasentrennung des Lösungsmittels in eine gasförmige und eine flüssige Phase bewirkt.

6. Verfahren gemäß Anspruch 5, dadurch gekennzeichnet, daß man eine Fraktionierung des Extrakts dadurch erreicht, indem man einen in der flüssigen Phase unlöslichen Anteil des Extrakts vor Gewinnung des Gesamtextrakts aus der flüssigen Phase separiert.

7. Verfahren gemäß Anspruch 6, dadurch gekennzeichnet, daß man die Auftrennung des Extrakts in mehr als zwei Fraktionen dadurch herbeiführt, daß man die Phasentrennung in mehreren Druck- und/oder Temperaturstufen vornimmt und den jeweils ungelösten Extraktanteil aus der betreffenden Stufe separat abführt.

8. Verfahren gemäß einem oder mehrerer der Ansprüche 1 bis 4, dadurch gekennzeichnet, daß man den Extrakt durch Adsorption aus dem erfindungsgemäßen Lösungsmittel an feste Adsorbentien bindet.

9. Verfahren gemäß einem oder mehrerer der Ansprüche 1 bis 4, dadurch gekennzeichnet, daß man den Extrakt durch Flüssig-flüssig-Extraktion aus dem erfindungsgemäß verwendeten Lösungsmittel entfernt.

10. Verfahren gemäß einem oder mehreren der Ansprüche 1 bis 9, dadurch gekennzeichnet, daß man, falls die zur Extraktion verwendete Lösung brennbare Komponenten enthält, Mischungsverhältnisse anwendet, die im Gemisch mit Luft keinen Zündbereich haben.

## Claims

1. A process für the extractive treatment of vegetable and animal matter with a liquid solvent mixture which is not injurious to health, characterized by using a two-component solution

6

(a)  the first component of which is gaseous per se under the prevailing conditions and
(b)  the second component of which by itself has physical properties such that the mixture of (a) and (b) is liquid at the temperature employed.

2. Process according to claim 1 characterized in that the first component is $CO_2$ alone or gas mixtures, preferably mixtures containing $CO_2$.

3. Process according to claim 1 and/or 2 characterized in that the second component is selected from constituents of vegetable or animal matter or food substances.

4. Process according to claims 1 to 3 characterized in that it is carried out in the temperature range between room temperature and 340 K.

5. Process according to one or more of claims 1 to 4 characterized in that the solvent is recycled and the extract is separated by lowering the pressure and/or raising the temperature thereby effecting phase separation of the solvent into a gaseous and a liquid phase.

6. Process according to claim 5 characterized in that the extract is fractionated by separating from the liquid phase a portion of the extract insoluble in the liquid phase prior to the recovery of all the extract from the liquid phase.

7. Process according to claim 6 characterized in that the extract is separated into more than two fractions by effecting phase separation in several pressure and/or temperature stages and separately removing the undissolved extract portions from the respective stages.

8. Process according to one or more of claims 1 to 4 characterized in that the extract ist adsorbed to solid adsorbents from the solvent used according to the invention.

9. Process according to one or more of claims 1 to 4 characterized in that the extract is removed from the solvent used according to the invention by liquid-liquid extraction.

10. Process according to one or more of claims 1 to 9 characterized in that, if the solvent used for extraction contains combustible components, the selected mixing ratios do not have an ignition range in mixture with air.


**Revendications**

1. Procédé pour le traitement par extraction de matières végétales et animales, avec un mélange solvant liquide, sans inconvénient pour la santé, caractérisé en ce qu'on utilise unte solution constituée par deux composants:

a)  le premier composant étant dans les conditions d'utilisation, en soi à l'état gazeux, et
b)  le second composant ayant, pris seul, des propriétés physiques telles que le mélange de (a) et (b) est liquide à la température utilisée.

2. Procédé selon la revendication 1, caractérisé en ce qu'on utilise comme premier composant $CO_2$ seul, ou des mélanges de gaz, de préférence avec $CO_2$.

3. Procédé selon la revendication 1 et/ou 2, caractérisé en ce qu'on utilise comme second composant des constituants de la matière végétale ou animale, ou des substances valables comme aliments.

4. Procédé selon les revendications 1 à 3, caractérisé en ce qu'on opère dans un domaine de température compris entre la température ambiante et 67°C.

5. Procédé selon une ou plusieurs des revendications 1 à 4, caractérisé en ce qu'on introduit le solvant dans le circuit, afin qu'il sépare l'extrait, et on abaisse la pression et/ou augmente la température, provoquant ainsi une séparation de phase du solvant, en une phase gazeuse et une phase liquide.

6. Procédé selon la revendication 5, caractérisé en ce qu'on obtient un fractionnement de l'extrait par le fait qu'on sépare une partie de cet extrait, insoluble dans la phase liquide, avant l'obtention de l'extrait total à partir de la phase liquide.

7. Procédé selon la revendication 6, caractérisé en ce qu'on provoque la séparation de l'extrait, par le fait que l'on réalise la séparation des phases en plusieurs stades de pression et/ou de température et élimine séparément, à partir du stade correspondant, la portion d'extrait insoluble.

8. Procédé selon une ou plusieurs des revendications 1 à 4, caractérisé en ce que l'on fixe l'extrait par adsorption à partir du solvant selon l'invention, sur un adsorbant.

9. Procédé selon une ou plusieurs des revendications 1 à 4, caractérisé en ce que l'on enlève l'extrait du solvant utilisé conformément à l'invention, par une extraction liquide-liquide.

10. Procédé selon une ou plusieurs des revendications 1 à 9, caractérisé en ce qu'on utilise, dans le cas ou la solution servant à l'extraction contient des constituants combustibles, des proportions qui en mélange avec l'air n'entrent pas dans les limites d'inflammabilité.

FIG.1

FIG. 2